# EUROPEAN PATENT APPLICATION

(11) **EP 2 316 790 A1**
(43) Date of publication of application: **04.05.2011**
(21) Application number: 09797929.8
(22) Date of filing: 15.07.2009
(51) Int. Cl.: C01B 21/082, B23B 27/14, C22C 1/05, C22C 29/04

(54) **HARD POWDER, METHOD FOR PRODUCING HARD POWDER AND SINTERED HARD ALLOY**

(30) Priority: 16.07.2008 JP 2008185433
(71) Applicant: Japan Fine Ceramics Center, Nagoya-shi Aichi 456-8587 (JP); Tungaloy Corporation, Iwaki-shi, Fukushima 970-1144 (JP)
(72) Inventor: Matsubara, Hideaki, Aichi 456-8587 (JP); Matsumoto, Mineaki, Aichi 456-8587 (JP); Nomura, Hiroshi, Aichi 456-8587 (JP); Taniguchi, Yasuro, Fukushima 970-1144 (JP); Kitamura, Kozo, Fukushima 970-1144 (JP); Hara, Hiroki, Fukushima 970-1144 (JP); Tamura, Keitaro, Fukushima 970-1144 (JP); Takesawa, Daisuke, Fukushima 970-1144 (JP)
(74) Representative: Vossius & Partner
(86) International application number: PCT/JP2009/062774
(87) International publication number: WO 2010/008004

(57) **Abstract**

This is to provide hard powder which contains much amount of a complex carbonitride solid solution, which can improve sinterability of a sintered hard alloy and give a uniform structure. The hard powder is powder containing 90 vol% or more of a complex carbonitride solid solution represented by (Ti₁₋ₓ,Mₓ)(C_{1-y},N_{y}) [wherein M represents at least one element selected from the group consisting of W, Mo, Nb, Zr and Ta, x represents an atomic ratio of M based on the sum ofTi and M, y represents an atomic ratio ofN based on the sum of C and N, x and y each satisfy 0.05≦x≦0.5 and 0.01≦y≦0.75.].

## Description

### TECHNICAL FIELD

The present invention relates to hard powder which can be used as starting powder of a sintered hard alloy, ceramics or a cBN sintered compact, a process for preparing the hard powder and a sintered hard alloy using the hard powder.

### BACKGROUND ART

Ti(C,N)-based cermet has heretofore been used as a cutting tool or wear resistant tool, etc., since it is excellent in wear resistance. As a representative composition thereof, it has been known a Ti(C,N)-19vol%Mo2C-16.4vol%Ni alloy (for example, see Non-Patent Literature 1.). When the cross-sectional structure of the Ti(C,N)-based cermet is observed by an electron microscope, it can be understood that it is constituted by a hard phase with a core-rim structure comprising a core portion of Ti(C,N) and a rim portion of complex carbonitride such as (Ti,W,Mo,Ta)(C,N), etc., and a binder phase.

The conventional Ti(C,N)-based cermet has been prepared by mixing hard phase-forrming powder such as Ti(C,N), WC, Mo₂C, etc., and binder phase-forming powder such as Ni, Co, etc., molding the mixture and sintering. A core-rim structure of the hard phase of the conventional Ti(C,N)-based cermet generates by the reason that formation temperatures of fused liquids of the hard phase-forming powder and the binder phase-forming powder at the time of sintering. For example, Mo₂C which has a low formation temperature of fused liquid becomes a liquid phase at a lower temperature than that of Ti(C,N). Thus, in the course of a temperature-raising step, a sintering step and a cooling step, (Ti,Mo)(C,N) is re-precipitated around Ti(C,N) to generate a core-rim structure due to dissolution of the hard phase-forming powder into the liquid phase and re-precipitation of the hard phase component. Apart from the above-mentioned mechanism, even when Ti(C,N), and WC and Mo₂C are melted, there is a compositional region which separates to two phase. In either of the mechanisms, the hard phase becomes an ununiform composition.

In the conventional Ti(C,N)-based cermet, melting temperatures of the starting powders are different from each other as mentioned above, so that there is a problem that the liquid phase is ununiformly formed at the inside of the formed material at the time of sintering to lower sinterability, and in addition, there is a problem that it takes much time until the formation amount of the liquid phase becomes maximum. Also, formation of ununiform liquid phase causes a problem that fracture toughness of the cermet is lowered since a ratio of the hard phase particles to be adhered is increased due to rearrangement or grain-growth of local hard phase particles.

On the other hand, there is a method which uses as starting powder not a carbide, nitride or carbonitride containing one kind of a metal element such as Ti(C,N), WC, Mo₂C, etc., but a complex carbonitride containing two or more kinds of metal elements such as (Ti,W)(C,N), etc. As a prior art technique concerning a sintered hard alloy using a complex carbonitride, there is a carbonitride alloy sintered compact using a carbonitride alloy having a whole composition of (Ti_{0.82} Mo_{0.87})(C_{0.87}N_{0.13})_{0.92} (for example, see Patent Literature 1, page 8, right column, line 35 to page 9, left column, line 5.). However, this carbonitride alloy sintered compact is required to synthesize a solid solution powder which becomes a starting material in an inert atmosphere, so that a nitrogen amount of the solid solution powder cannot be made high. Thus, the carbonitride alloy sintered compact which is prepared by using a solid solution powder containing less amount of nitrogen involves a problem that cutting property is poor due to less amount of nitrogen.

Also, as a prior art technique of a hard powder, there is a solid solution powder containing a carbide or a carbonitride of at least two metal components of Ti and a metal(s) selected from Groups IV, V and VI metals of the Periodic Table and a mixture thereof, having a nano size of 100 nm or less (for example, see Patent Literature 2, page 13, lines 31 to 33.). However, this solid solution powder can be obtained by mixing oxides such as TiO₂, WO₃, etc., and subjecting to reduction treatment at 1300°C, in an atmosphere of H₂, CH₄ or CO/CO₂, so that a particle size of the powder becomes a nano size of 100 nm or less. The cermet using the solid solution powder involves a problem that fracture toughness is low since a grain size of the hard phase became small.

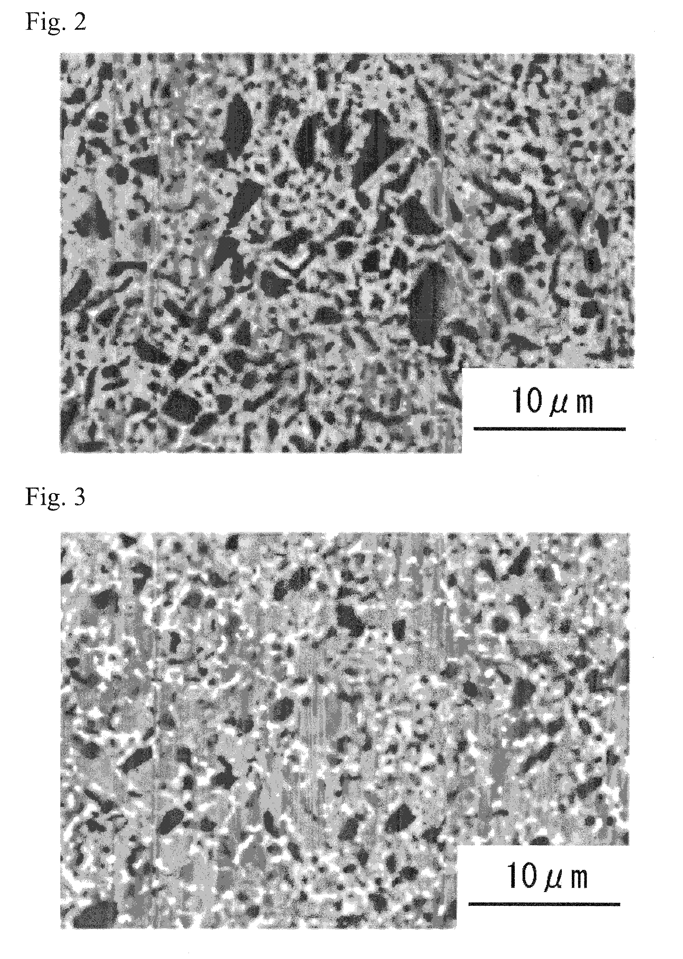

[Non-Patent Literature 1] Edited and written by Hisashi Suzuki "Hard alloy and sintered hard material" p.329, Fig. 2.34 (1986)
[Patent Literature 1] JP Sho56-51201B
[Patent Literature 2] JP 2006-299396A

### DISCLOSURE OF THE INVENTION

### PROBLEMS TO BE SOLVED BY THE INVENTION

The present invention has been made to solve the above-mentioned problems, and an object thereof is to provide hard powder which can be used as starting powder of a sintered hard alloy, ceramics, or cBN sintered compact, a process for preparing the hard powder, and a sintered hard alloy using the hard powder.

### MEANS TO SOLVE THE PROBLEMS

The present inventors have carried out researches for the purpose of preparing a nitrogen-enriched and coarse particulated carbonitride powder containing two or more kinds of metal elements, and as a result, they have found that a complex carbonitride comprising a solid solution with a uniform composition containing two or more kinds of metal elements could be obtained by mixing each powder of WC, Mo₂C, TaC, ZrC and NbC, and subjecting the mixture to heat treatment at pressure: 0.5 to 100 atm in an nitrogen atmosphere at a temperature of 2000°C or higher. Moreover, they have found that a sintered hard alloy having a uniform structure could be obtained when the complex carbonitride powder and a binder phase-forming powder are mixed, molded and further sintered.

A first embodiment of the present invention is a hard powder which comprises a complex carbonitride solid solution represented by (Ti₁₋ₓ,Mₓ)(_{1-y},N_{y}) [provided that M represents at least one element selected from the group consisting of W, Mo, Nb, Zr and Ta, x represents an atomic ratio of M based on the sum ofTi and M, y represents an atomic ratio of N based on the sum of C and N, x and y each satisfy 0.05≦x≦0.5 and 0.01≦y≦0.75.] in an amount of 90 vol% or more.

In the hard powder of the present invention, an atomic ratio x ofM based on the total of Ti and M is 0,05≦x≦0.5. When x is 0.05 or more, sufficient toughness can be provided, and when x is 0.5 or less, sufficient hardness can be obtained. Also, an atomic ratio y of N based on the total of C and N is 0.01≦y≦0.75. When y is 0.01 or more, a grain-growth inhibiting effect can be sufficiently obtained when a sintered hard alloy is prepared, and when y is 0.75 or less, sinterability of the sintered hard alloy is not lowered. Of these, the atomic ratio y is more preferably 0.15≦y≦0.75, further preferably 0.25≦y≦0.75, and particularly preferably 0.4≦y≦0.75.

The hard powder of the present invention contains 90 vol% or more of the complex carbonitride solid solution, and when the hard powder of the present invention is sintered with a binder phase-forming component such as Co, Ni, etc., the liquid phase is formed with 1 step so that effects of improving in sinterability, and capable of sintering at a low temperature can be obtained. Moreover, the resulting sintered hard alloy has uniform structure so that an effect of having high fracture toughness can be obtained. The hard powder of the present invention may be constituted only by the complex carbonitride solid solution, and other than the complex carbonitride solid solution, a Ti-enriched phase such as TiC, TiN, Ti(C,N), etc., and an M-element enriched phase such as WC, Mo₂C, NbC, ZrC, TaC, NbN, ZrN and TaN or a mutual solid solution thereof, may be further contained in an amount of 10 vol% or less in total.

The hard powder of the present invention preferably has an average particle size of 0.5 to 7 µm. When the average particle size is 0.5 µm or more, fracture toughness of the sintered hard alloy can be ensured, and when the average particle size is 7 µm or less, strength of the sintered hard alloy can be ensured. Incidentally, the average particle size was measured by the Fischer method.

Moreover, the complex carbonitride solid solution contained in the hard powder of the present invention has a uniform composition. Here, the uniform composition means that an amount of a metal element contained in the complex carbonitride solid solution is in the range of within ±5 atomic % from the respective average compositions. For example, a W amount of the complex carbonitride solid solution particle(s) contained in the hard powder of the present invention is measured, and when an average value of the W amount in the whole complex carbonitride solid solution is measured, then, the W amount of the respective complex carbonitride solid solution particles is in the range of within ±5 atomic % from the average value of the W amount. The complex carbonitride solid solution contained in the hard powder of the present invention has such a uniform composition, so that it can be obtained effects that a sintered hard alloy using the complex carbonitride solid solution is excellent in sinterability, and easily densified from a low temperature.

The hard powder of the present invention has a uniform composition, and excellent in wear resistance, so that it is preferably used as starting powder of a sintered hard alloy, ceramics, or cBN sintered compact. The sintered hard alloy, ceramics or cBN sintered compact which uses the hard powder of the present invention has effects that product quality is stable and sudden fracture is difficultly caused. In particular, when the hard powder of the present invention is used as starting powder of a sintered hard alloy, the binder phase-forming powder of the sintered hard alloy generates a liquid phase with one step during elevating the temperature, so that effects can be accomplished that it can be easily densified at a low temperature, and a sintered hard alloy excellent in sinterability can be obtained.

A second embodiment of the present invention is directed to a process for preparing a hard powder containing 90 vol% or more of the complex carbonitride solid solution represented by the composition mentioned below, which comprises (1) a step of mixing powder containing Ti, M, C and N to prepare a mixed powder which satisfies the formula: (Ti₁₋ₓ,Mₓ)(C_{1-y},N_{y}) [wherein M represents at least one element selected from the group consisting of W, Mo, Nb, Zr and Ta, x represents an atomic ratio of M based on the sum of Ti and M, y represents an atomic ratio ofN based on the sum of C and N, and x and y each satisfy 0.05≦x≦0.5 and 0.01≦y≦0.75.], (2) a step of subjecting the mixed powder to heat treatment in a nitrogen atmosphere at a pressure: 0.5 to 100 atm at 2000 to 2400°C, and (3) a step of pulverizing an aggregated product obtained by the heat treatment to regulate the graininess of the powder.

More specifically, powder of a carbide, nitride, carbonitride containing Ti such as TiC, TiN, Ti(C,N), etc., and powder of a carbide, nitride, carbonitride containing W, Mo, Nb, Zr, Ta such as WC, Mo₂C, NbC, ZrC, TaC, NbN, ZrN, TaN, etc., are made a predetermined formulating composition mentioned above, and after mixing the powder by a ball mill, the obtained mixed powder is subjected to heat treatment in a nitrogen atmosphere at a pressure: 0.5 to 100 atm and at 2000°C or higher, more preferably 2100°C or higher, particularly preferably 2200°C or higher. When the atmosphere of the heat treatment is made a nitrogen atmosphere, nitrogen-enrichment of the complex carbonitride solid solution can be realized. A pressure of the nitrogen atmosphere at the heat treatment is 0.5 to 100 atm. If the pressure is 0.5 atm or higher, the complex carbonitride is not decomposed whereby reduction of a nitrogen amount does not occur, and if the pressure is 100 atm or less, improvement in the effect of controlling decomposition of the complex carbonitride can be admitted, and a cost for manufacture is not increased. The pressure of the nitrogen atmosphere is more preferably I to 50 atm. When the temperature of the heat treatment is 2000°C or higher, more preferably 2100°C or higher, a complex carbonitride solid solution having a uniform composition can be obtained. However, if the temperature of the heat treatment exceeds 2400°C, evaporation of element(s) constituting the complex carbonitride solid solution becomes remarkable, and the product is firmly sintered to cause difficult pulverization. Thus, the temperature of the heat treatment is preferably 2000 to 2400°C, more preferably 2100 to 2300°C. After cooling, the obtained aggregated product of the complex carbonitride was crushed by using, for example, a ball mill, and then, sieved to obtain the hard powder of the present invention.

A third embodiment of the present invention is directed to a sintered hard alloy comprising a hard phase containing 90 vol% or more of complex carbonitride which comprises a complex carbonitride solid solution represented by (Ti₁₋ₓ,Mₓ)(C_{1-y},N_{y}) [wherein M represents at least one element selected from the group consisting of W, Mo, Nb, Zr and Ta, x represents an atomic ratio of M based on the sum of Ti and M, y represents an atomic ratio ofN based on the sum of C and N, x and y each satisfy 0,05≦x≦0.5 and 0,01≦y≦0.75.] based on the whole hard phase, and a binder phase.

The hard phase of the sintered hard alloy according to the present invention may be constituted by a complex carbonitride solid solution alone, but may contain, other than the complex carbonitride solid solution, a Ti-enriched phase such as TiC, TiN, Ti(C,N), etc., and an M-element enriched phase such as WC, Mo₂C, NbC, ZrC, TaC, NbN, ZrN, TaN or a mutual solid solution thereof in an amount in total of 10 vol% or less based on the whole hard phase.

More specifically, the hard powder of the present invention and the binder phase-forming powder such as Co, Ni, etc., are mixed in a ball mill, the resulting mixed powder is placed in a mold to carry out molding, and the resulting molded material is sintered in vacuum or in an inert gas atmosphere at a sintering temperature of 1300 to 1600°C to obtain a sintered hard alloy of the present invention. When the hard phase of the sintered hard alloy is made 70 vol% or more and the binder phase is made 30 vol% or less, wear resistance is improved, and when the hard phase of the sintered hard alloy is made 90 vol% or less and the binder phase is made 10 vol% or more, fracture resistance is not lowered. Accordingly, the sintered hard alloy of the present invention is preferably constituted by a hard phase: 70 to 90 vol%, and a binder phase: 10 to 30 vol%.

### EFFECTS OF THE INVENTION

By using the hard powder of the present invention, sinterability of the sintered hard alloy can be improved. The sintered hard alloy using the hard powder of the present invention has high fracture toughness and excellent in fracture resistance, so that when it is applied to a cutting tool or a wear resistant tool, productivity thereof can be improved as well as wear resistance or durability can be markedly improved.

### BRIEF DESCRIPTION OF THE DRAWINGS

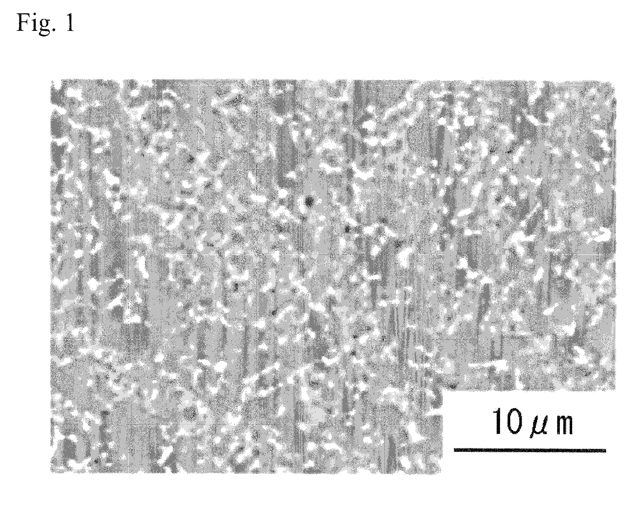

[Fig. 1] This is an electron microscopic photograph of a cross-sectional structure of Present product 1.
[Fig. 2] This is an electron microscopic photograph of a cross-sectional structure of Comparative product 3.
[Fig. 3] This is an electron microscopic photograph of a cross-sectional structure of Comparative product 4.
[Fig. 4] This is a drawing showing an effect of a sintering temperature exerted densities of Present product 1 and Comparative product 3.

### BEST MODE TO CARRY OUT THE INVENTION

### Example 1

### [Present product 1]

As starting powder, commercially available TiC powder, Ti(C_{0.3},N_{0.7}) powder and WC powder were prepared, and they were formulated so that the mixture became 18.6 mol% of TiC, 71.4 mol% of Ti(C_{0.3},N_{0.7}) and 10 mol% of WC. The formulated starting powder was mixed by a ball mill, and the resulting mixed powder was subjected to heat treatment in a nitrogen atmosphere at a pressure of 1 atm and at 2200°C for 2 hours. After cooling, the obtained aggregated product of the complex carbonitride was crushed by using a ball mill and sieved to obtain hard powder having an average particle size of 1.5 µm. This is made Present product 1. When the hard powder of Present product 1 was analyzed by an electron microscope to which EDS had been attached, a (Ti_{0.9},W_{0.1})(C_{0.5},N_{0.5}) solid solution and a Ti-enriched phase (TiC, Ti(C_{0.3},N_{0.7})) were observed. The contents of the respective phases contained in the hard powder were 97.6 vol% of the (Ti_{0.9},W₀₁)(C_{0.5},N_{0.5}) solid solution and 2.4 vol% of the Tri-enriched phase. When a Ti amount and a W amount of the respective (Ti_{0.9},W_{0.1})(C_{0.5},N_{0.5}) solid solution particles were measured by an EDS-attached electron microscope, the differences of the Ti amount and the W amount from the average values of the (Ti_{0.9}, W_{0.1})(C_{0.5}, N_{0.5}) solid solution particles were within ±5 atomic %.

### [Present product 2]

As starting powder, commercially available TiC powder, Ti(C_{0.3},N_{0.7}) powder, M₀₂C powder and C powder were prepared, and they were formulated so that the mixture became 18.6 mol% of TiC, 71.4 mol% of Ti(C_{0.3},N_{0.7}), 5 mol% of Mo₂C and 5 mol% of C. The formulated starting powder was mixed with a ball mill, and the resulting mixed powder was subjected to heat treatment in a nitrogen atmosphere at a pressure of 1 atm and at 2200°C for 2 hours. After cooling, the obtained aggregated product of the complex carbonitride was pulverized by using a ball mill and sieved to obtain hard powder having an average particle size of 1.5 µm. This is made Present product 2. When the hard powder of Present product 2 was analyzed by an electron microscope to which EDS had been attached, a (Ti_{0.9},Mo_{0.1})(C_{0.5},N_{0.5}) solid solution alone was observed. When a Ti amount and a Mo amount of the respective (Ti_{0.9},Mo_{0.1})(C_{0.5},N_{0.5}) solid solution particles were measured by an EDS-attached electron microscope, the differences of the Ti amount and the Mo amount from the average values of the (Ti_{0.9},Mo_{0.1})(C_{0.5},N_{0.5}) solid solution particles were within ±5 atomic %.

### [Present product 3]

As starting powder, commercially available TiC powder, Ti(C_{0.3},N_{0.7}) powder, Mo₂C powder, ZrC powder and C powder were prepared, and they were formulated so that the mixture became 8.6 mol% of TiC, 71.4 mol% of Ti(C_{0.3},N_{0.7}), 5 mol% of Mo₂C, 10 mol% of ZrC and 5 mol% of C. The formulated starting powder was mixed with a ball mill, and the resulting mixed powder was subjected to heat treatment at a pressure of 1 atm and at 2200°C for 2 hours. After cooling, the obtained aggregated product of the complex carbonitride was crushed by using a ball mill and sieved to obtain hard powder having an average particle size of 1.5 µm. This is made Present product 3. When the hard powder of Present product 3 was analyzed by an EDS-attaehed electron microscope, a (Ti_{0.8},Mo_{0.1},Zr_{0.1})(C_{0.5},N_{0.5}) solid solution and a MoZr-enriched phase (a phase containing 30 atomic % or more of Mo and Zr in total based on the total amount of the metal elements) were observed. The contents of the respective phases contained in the hard powder were 98.5 vol% of the (Ti_{0.8},Mo_{0.1},Zr_{0.1})(C_{0.5},N_{0.5}) solid solution and 1.5 vol% of the MoZr-enriched phase. When a Ti amount, a Mo amount and a Zr amount of the respective (Ti_{0.8},Mo_{0.1},Zr_{0.1})(C_{0.5},N_{0.5}) solid solution particles were measured by an EDS-attached electron microscope, the differences of the Ti amount, the Mo amount and the Zr amount from the average values of the (Ti_{0.8},Mo_{0.1},Zr_{0.1})-(C_{0.5},N_{0.5}) solid solution particles were within ±5 atomic %.

### [Present product 4]

As starting powder, commercially available TiC powder, Ti(C_{0.3},N_{0.7}) powder, Mo₂C powder, NbC powder and C powder were prepared, and they were formulated so that the mixture became 8.6 mol% of TiC, 71.4 mol% ofTi(C_{0.3},N_{0.7}), 5 mol% of Mo₂C, 10 mol% of NbC and 5 mol% of C. The formulated starting powder was mixed with a ball mill, and the resulting mixed powder was subjected to heat treatment at a pressure of 1 atm and at 2200°C for 2 hours. After cooling, the obtained aggregated product of the complex carbonitride was crushed by using a ball mill and sieved to obtain hard powder having an average particle size of 1.5 µm. This is made Present product 4. When the hard powder of Present product 4 was analyzed by an electron microscope to which EDS had been attached, a (Ti_{0.8},Mo_{0.1},Nb_{0.1})(C_{0.5},N_{0.5}) solid solution and a MoNb-enriched phase (a phase containing 30 atomic % or more of Mo and Nb in total based on the total amount of the metal elements) were observed. The contents of the respective phases contained in the hard powder were 96.7 vol% of the (Ti_{0.8},Mo_{0.1}, Nb_{0.1})(C_{0.5},N_{0.5}) solid solution and 3.3 vol% of the MoNb-enriched phase. When a Ti amount, a Mo amount and a Nb amount af the respective (Ti_{0.8},Mo_{0.1},Nbo_{0.1})(C_{0.5},N_{0.5}) solid solution particles were measured by an EDS-attached electron microscope, the differences of the Ti amount, the Mo amount and the Nb amount from the average values of the (Ti_{0.8},Mo_{0.1},Nb_{0.1})(C_{0.5},N_{0.5}) solid solution particles were within ±5 atomic %.

### [Comparative product 1]

As starting powder, commercially available TiC powder, Ti(C_{0.3},N_{0.7}) powder and WC powder were prepared, and they were formulated so that the mixture became 18.6 mol% of TiC, 71.4 mol% of Ti(C_{0.3},N_{0.7}) and 10 mol% of WC. The formulated starting powder was mixed with a ball mill, and the resulting mixed powder was subjected to heat treatment at a pressure of 1 atm and at 1900°C for 2 hours. After cooling, the obtained aggregated product of the complex carbonitride was crushed by using a ball mill and sieved to obtain hard powder having an average particle size of 1.5 µm. This is made Comparative product 1. When the hard powder of Comparative product 1 was analyzed by an EDS-attached electron microscope, a (Ti_{0.9},W_{0.1})-(C_{0.5},N_{0.5}) solid solution, a Ti-enriched phase (TiC,Ti(C_{0.3},N_{0.7})) and a W-enriched phase (a phase containing 30 atomic % or more of W based on the total amount of the metal elements) were observed. The contents of the respective phases contained in the hard powder were 71.2 vol% of the (Ti_{0.9},W_{0.1})(C_{0.5},N_{0.5}) solid solution, 23.8 vol% of the Ti-enriched phase and 5.0 vol% of the W-enriched phase. When a Ti amount and a W amount of the respective (Ti_{0.9},W_{0.1})(C_{0.5},N_{0.5}) solid solution particles were measured by an EDS-attached electron microscope, the differences of the Ti amount and the W amount from the average values of the (Ti_{0.9},W_{0.1})(C_{0.5},N_{0.5}) solid solution particles were ±50 atomic % at the maximum value.

### [Comparative product 2]

As starting powder, commercially available TiC powder, Ti(C_{0.3},N_{0.7}) powder, M₀₂C powder and C powder were prepared, and they were formulated so that the mixture became 18.6 mol% of TiC, 71.4 mol% of Ti(C_{0.3},N_{0.7}), 5 mol% of Mo₂C and 5 mol% of C. The formulated starting powder was mixed with a ball mill, and the resulting mixed powder was subjected to heat treatment at a pressure of 1 atm and at 1900°C for 2 hours. After cooling, the obtained aggregated product of the complex carbonitride was crushed by using a ball mill and sieved to obtain hard powder having an average particle size of 1.5 µm. This is made Comparative product 2. When the hard powder of Comparative product 2 was analyzed by an electron microscope to which EDS had been attached, a (Ti_{0.9},Mo_{0.1})(C_{0.5},N_{0.5}) solid solution, a Ti-enriched phase (TiC,Ti(C_{0.3},N_{0.7})) and a Mo-enriched phase (a phase containing 30 atomic % or more of Mo based on the total amount of the metal elements) were observed. The contents of the respective phases contained in the hard powder were 88.8 vol% of the (Ti_{0.9},Mo_{0.1})(C₀.₅,N_{0.5}) solid solution, 10.3 vol% of the Ti-enriched phase and 0.9 vol% of the Mo-enriched phase. When a Ti amount and a Mo amount of the respective (Ti_{0.9},Mo_{0.1})(C_{0.5},N_{0.5}) solid solution particles were measured by an EDS-attached electron microscope, the differences of the Ti amount and the Mo amount from the average values of the (Ti_{0.9},Mo_{0.1})(C_{0.5},N_{0.5}) solid solution particles were ±30 atomic % at the maximum value.

### Example 2

### [Present product 5]

Commercially available Ni powder was prepared, and it was formulated so that the mixture became 83.6 vol% of the hard powder of Present product 1 and 16.4 vol% of the Ni powder, and they were mixed by a ball mill. The resulting mixed powder was molded, and the resulting molded material was sintered in vacuum at a sintering temperature of 1500°C and a sintering time of 1 hour, to obtain a sintered hard alloy having a composition of 83.6 vol% (Ti_{0.9},W_{0.1})(C_{0.5},N_{0.5})-16.4 vol% Ni. This is made Present product 5. When the cross-sectional structure of the sintered hard alloy of Present product 5 was observed by an electron microscope, no core-rim structure hard phase was observed, and it was constituted by a hard phase of the (Ti_{0.9},W_{0.1})(C_{0.5},N_{0.5}) solid solution and a binder phase.

### [Present product 6]

Commercially available Ni powder was prepared, and it was formulated so that the mixture became 83.6 vol% of the hard powder of Present product 2 and 16.4 vol% of the Ni powder, and they were mixed by a ball mill. The resulting mixed powder was molded, and the resulting molded material was sintered in vacuum at a sintering temperature of 1500°C and a sintering time of 1 hour, to obtain a sintered hard alloy having a composition of 83.6 vol% (Ti_{0.9},Mo_{0.1})(C_{0.5},N_{0.5})-16.4 vol% Ni. This is made Present product 6. When the cross-sectional structure of the sintered hard alloy of Present product 6 was observed by an electron microscope, no core-rim structure hard phase was observed, and it was constituted by a hard phase of the (Ti_{0.9},Mo_{0.1})(C_{0.5},N_{0.5}) solid solution and a binder phase.

### [Present product 7]

Commercially available Ni powder was prepared, and it was formulated so that the mixture became 83.6 vol% of the hard powder of Present product 3 and 16.4 vol% of Ni powder, and they were mixed by a ball mill. The resulting mixed powder was molded, and the resulting molded material was sintered in vacuum at a sintering temperature of 1500°C and a sintering time of 1 hour, to obtain a sintered hard alloy having a composition of 83.6 vol% (Ti_{0.8},Mo_{0.1},Zr_{0.1})(C_{0.5},N_{0.5})-16.4 vol% Ni. This is made Present product 7. When the cross-sectional structure of the sintered hard alloy of Present product 7 was observed by an electron microscope, no core-rim structure hard phase was observed, and it was constituted by a hard phase of the (Ti_{0.8},Mo_{0.1},Zr_{0.1})-(C_{0.5},N_{0.5}) solid solution and a binder phase.

### [Present product 8]

Commercially available Ni powder was prepared, and it was formulated so that the mixture became 83.6 vol% of the hard powder of Present product 4 and 16.4 vol% ofNi powder, and they were mixed by a ball mill. The resulting mixed powder was molded, and the resulting molded material was sintered in vacuum at a sintering temperature of 1500°C and a sintering time of 1 hour, to obtain a sintered hard alloy having a composition of 83.6 vol% (Ti_{0.8},Mo_{0.1},Nb_{0.1})(C_{0.5},N_{0.5})-16.4 vol% Ni. This is made Present product 8. When the cross-sectional structure of the sintered hard alloy of Present product 8 was observed by an electron microscope, no core-rim structure hard phase was observed, and it was constituted by a hard phase of the (Ti_{0.8},Mo_{0.1},Nb_{0.1})-(C_{0.5},N_{0.5}) solid solution and a binder phase.

### [Comparative product 3]

As starting powder, commercially available Ti(C_{0.5},N_{0.5}) powder, WC powder and Ni powder were prepared, and they were formulated so that the mixture became 74.8 vol% of Ti(C_{0.5}, N_{0.5}), 8.8 vol% ofWC and 16.4 vol% of Ni, and they were mixed by a ball mill. The resulting mixed powder was molded, and the resulting molded material was sintered in vacuum at a sintering temperature of 1500°C and a sintering time of 1 hour, to obtain a sintered hard alloy having a composition of 83.6 vol% [90 mol% Ti(C_{0.5},N_{0.5})-10 mol% WC] hard phrase-16.4 vol% Ni. This is made Comparative product 3. When the cross-sectional structure of the sintered hard alloy of Comparative product 3 was observed by an electron microscope, almost all the hard phase was core-rim structure. That is, Comparative product 3 was constituted by a core-rim structure hard phase and a binder phase.

### [Comparative product 4]

As starting powder, commercially available Ti(C_{0.5},N_{0.5}) powder, Mo₂C powder and Ni powder were prepared, and they were formulated so that the mixture became 74.0 vol% of Ti(C_{0.5},N_{0.5}), 7.8 vol% of Mo₂C, 1.8 vol% of C powder and 16.4 vol% ofNi, and they were mixed by a ball mill. The resulting mixed powder was molded, and the resulting molded material was sintered in vacuum at a sintering temperature of 1500°C and a sintering time of 1 hour, to obtain a sintered hard alloy having a composition of 83.6 vol% [90 mol% Ti(C_{0.5},N_{0.5})-10 mol% Mo₂C] hard phase-16.4 vol% Ni. This is made Comparative product 2. When the cross-sectional structure of the sintered hard alloy of Comparative product 2 was observed by an electron microscope, no core-rim structure hard phase was observed, a part of the hard phase was core-rim structure. That is, Comparative product 4 was constituted by a partially core-rim structure hard phase and a binder phase.

### [Comparative product 5]

Commercially available Ni powder was prepared, and it was formulated so that the mixture became 83.6 vol% of the hard powder of Comparative product 1 and 16.4 vol% ofNi powder, and they were mixed by a ball mill. The resulting mixed powder was molded, and the resulting molded material was sintered in vacuum at a sintering temperature of 1500°C and a sintering time of 1 hour, to obtain a sintered hard alloy having a composition of 83.6 vol% (Ti_{0.9},W_{0.1})(C_{0.5},N_{0.5})-16.4 viol% Ni. This is made Comparative product 5. When the cross-sectional structure of the sintered hard alloy of Comparative product 5 was observed by an electron microscope, no core-rim structure hard phase was observed, and it was constituted by a hard phase of the (Ti_{0.9},W_{0.1})(C_{0.5},N_{0.5}) solid solution, the Ti-enriched phase (TiC,Ti(C_{0.3},N_{0.7})) and the W-enriched phase (a phase containing 30 atomic % or more of W based on the total amount of the metal elements) and a binder phase.

### [Comparative product 6]

Commercially available Ni powder was prepared, and it was formulated so that the mixture became 83.6 vol% of the hard powder of Comparative product 2 and 16.4 vol% of Ni powder, and they were mixed by a ball mill. The resulting mixed powder was molded, and the resulting molded material was sintered in vacuum at a sintering temperature of 1500°C and a sintering time of 1 hour, to obtain a sintered hard alloy having a composition of 83.6 vol% (Ti_{0.9},Mo_{0.1})(C₀.₅,N_{0.5})-16.4 vol% Ni. This is made Comparative product 6. When the cross-sectional structure of the sintered hard alloy of Comparative product 6 was observed by an electron microscope, no core-rim structure hard phase was observed, and it was constituted by a hard phase of the (Ti_{0.9,}Mo_{0.1})(C_{0.5},N_{0.5}) solid solution, the Ti-enriched phase (TiC,Ti(C_{0.3},N_{0.7})) and the Mo-enriched phase (a phase containing 30 atomic % or more of Mo based on the total amount of the metal elements) and a binder phase.

With regard to the sintered hard alloys of Present products 5 to 8 and Comparative products 3 to 6 thus prepared, cross-sectional structures were observed to measure an areal ratio of the core portion (areal %) ofTi(C,N) based on the whole cross-sectional structure, and a Vicker's Hardness Hv at an applied load of 30 kgf, and fracture toughness KIC (MPam^{1/2}) were measured. These results were shown in Table 1.

**[Table 1]**

| Sample No. | Areal ratio at core portion (areal %) | Vicker's Hardness Applied load 30 kgf | Fracture toughness (MPam^{1/2}) |
|---|---|---|---|
| Present product 5 | 0 | 1150 | 14.7 |
| Present product 6 | 0 | 1217 | 14.2 |
| Present product 7 | 0 | 1144 | 14.5 |
| Present product 8 | 0 | 1217 | 14.4 |
| Comparative product 3 | 28.7 | 1165 | 13.0 |
| Comparative product 4 | 28.5 | 1211 | 12.5 |
| Comparative product 5 | 21 | 1211 | 13.1 |
| Comparative product 6 | 15 | 1159 | 13.5 |

It can be understood that no core portion of Ti(C,N) exists in Present products 5 to 8. Also, it can be understood that with regard to the hardness, Comparative products 3 to 6 and Present products 5 to 8 are substantially the same, but fracture toughness is clearly improved in Present products 5 to 8 as compared with those of Comparative products 3 to 6. This can be considered by the reason that the structures of Present products 5 to 8 became uniform so that contiguity between hard phases is decreased whereby fracture toughness of Present products 5 to 8 is improved.

### Example 3

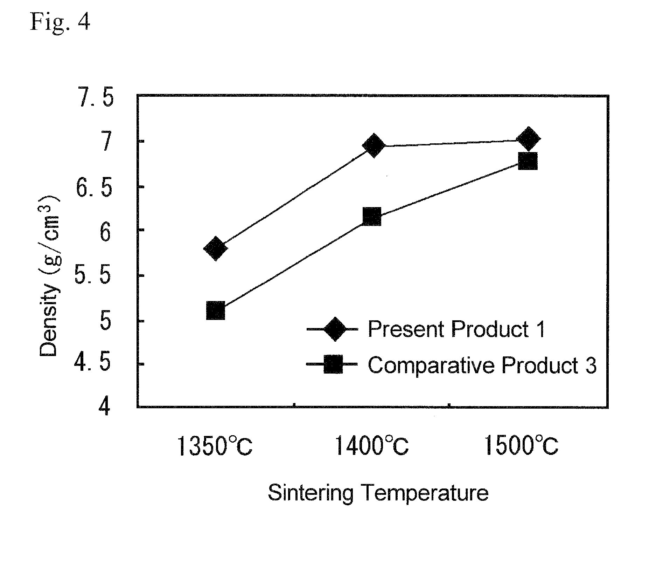

Effects of the sintering temperature exerted to the density of Present product 1 and that of Comparative product 3 were shown in Fig. 4. It can be understood that densification of Present product 1 occurs at a lower temperature, i.e., occurs quickly, as compared with that of Comparative product 3 whereby sinterability is improved. As a factor in which the sinterability is improved, there may be mentioned that, in Comparative product 3, a liquid phase forms two steps that a melt eutetic of WC and Ni is formed at a certain temperature during elevating the temperature, and a melt eutetic of Ti(C_{0.5},N_{0.5}) and Ni is formed at a different temperature, but in Present product 1, a melt eutetic of a (Ti_{0.9},W_{0.1})(C_{0.5},N_{0.5}) solid solution and Ni is formed with one step, so that many liquid phases are formed at once.

## Claims

1. A hard powder which comprises 90 vol% or more of a complex carbonitride solid solution represented by the formula (Ti₁₋ₓ,Mₓ)(C_{1-y},N_{y}) [wherein M represents at least one element selected from the group consisting of W, Mo, Nb, Zr and Ta, x represents an atomic ratio of M based on the sum of Ti and M, y represents an atomic ratio ofN based on the sum of C and N, and x and y each satisfy 0.05≦x≦0.5 and 0.01≦y≦0.75.],

2. The hard powder according to Claim 1, wherein an average particle size of the hard powder is 0.5 to 7 µm.

3. A process for preparing a hard powder which comprises
(1) a step of obtaining mixed powder by mixing powders which contain Ti, M, C and N to satisfy (Ti₁₋ₓ,Mₓ)(C_{1-y},N_{y}) [wherein M represents at least one element selected from the group consisting of W, Mo, Nb, Zr and Ta, x represents an atomic ratio of M based on the sum of Ti and M, y represents an atomic ratio ofN based on the sum of C and N, x and y each satisfy 0.05≦x≦0.5 and 0.01≦y≦0.75.],
(2) a step of subjecting the mixed powder to heat treatment in a nitrogen atmosphere with a pressure: 0.5 to 100 atm at 2000 to 2400°C, and
(3) a step of pulverizing an aggregated product obtained by the heat treatment
wherein the hard powder contains 90 vol% or more of a complex carbonitride solid solution represented by (Ti₁₋ₓ,Mₓ)(C_{1-y},N_{y}) [wherein M, x and y have the same meanings as defined above.].

4. A sintered hard alloy which comprises a hard phase containing 90 vol% or more of a complex carbonitride solid solution represented by (Ti₁₋ₓ,Mₓ)(C_{1-y},N_{y}) [wherein M represents at least one element selected from the group consisting of W, Mo, Nb, Zr and Ta, x represents an atomic ratio of M based on the sum of Ti and M, y represents an atomic ratio ofN based on the sum of C and N, x and y each satisfy 0.05≦x≦0.5 and 0.01≦y≦0.75.] based on the whole hard phase, and a binder phase.

5. The sintered hard alloy according to Claim 4, wherein the alloy is constituted by 70 to 90 vol% of the hard phase and 10 to 30 vol% of the binder phase.
